(19) Europäisches Patentamt
European Patent Office
Office européen des brevets

(11) **EP 2 287 811 B1**

(12) **EUROPÄISCHE PATENTSCHRIFT**

(45) Veröffentlichungstag und Bekanntmachung des Hinweises auf die Patenterteilung:
**30.05.2018   Patentblatt 2018/22**

(51) Int Cl.:
*G07C 9/00* (2006.01)   *G06F 21/31* (2013.01)
*F03D 7/04* (2006.01)

(21) Anmeldenummer: **10007997.9**

(22) Anmeldetag: **30.07.2010**

(54) **Verfahren und Vorrichtung zur Zugriffsregelung auf Anlagensteuerungen von Windenergieanlagen**

Method and device for regulating access to wind energy assembly control units

Procédé et dispositif de réglage de l'accès sur des commandes d'installations d'éoliennes

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **12.08.2009   DE 102009037224**

(43) Veröffentlichungstag der Anmeldung:
**23.02.2011   Patentblatt 2011/08**

(73) Patentinhaber: **Senvion GmbH**
**22297 Hamburg (DE)**

(72) Erfinder:
• **Meier, Stefan**
  **24145 Kiel (DE)**
• **Hartung, André**
  **24211 Schellhorn (DE)**
• **Kunft, Guntram**
  **24768 Rendsburg (DE)**

(74) Vertreter: **Glawe, Delfs, Moll**
**Partnerschaft mbB**
**von Patent- und Rechtsanwälten**
**Postfach 13 03 91**
**20103 Hamburg (DE)**

(56) Entgegenhaltungen:
EP-A1- 1 519 040        WO-A1-02/18733
WO-A1-2006/021047   WO-A2-2008/095866
FR-A1- 2 760 874        US-A- 3 866 173
US-A1- 2007 245 150

**Beschreibung**

Die Erfindung betrifft ein Verfahren für die Zugriffsregelung auf Anlagensteuerungen von Windenergieanlagen sowie eine Windenergieanlage, die zur Durchführung des erfindungsgemäßen Verfahrens ausgebildet ist.

Die einzelnen Komponenten einer Windenergieanlage werden über eine Anlagensteuerung geregelt. Die Anlagensteuerung ist dabei in der Regel als Rechnereinheit ausgebildet, die sich vor Inbetriebnahme und während des Betriebs einer Windenergieanlage konfigurieren lässt. Sie kann so über die gesamte Lebensdauer der Windenergieanlage immer an die aktuellsten Erkenntnisse zum optimalen Betrieb einer Windenergieanlage angepasst werden. Außerdem stellt die Anlagensteuerung Informationen über den Betrieb der Windenergieanlage zur Verfügung.

Um zu vermeiden, dass ein beliebiger Dritter die Anlagensteuerung einer Windenergieanlage konfigurieren kann, wird der Zugang zur Anlagensteuerung in der Regel durch eine Kombination aus Benutzername und Passwort geschützt. Dazu sind im Stand der Technik in der Anlagensteuerung Passwortlisten in Form einer Benutzerdatenbank hinterlegt, welche die zum Zugang berechtigenden Benutzernamen und Passwörter enthält.

Da für jeden zugangsberechtigten Benutzer gemäß dem Stand der Technik ein einzelner Datensatz in der Anlagensteuerung abgelegt werden muss, muss die Benutzerdatenbank bei jeder Änderung der Zugangsberechtigung einzelner Benutzer aktualisiert werden. Dies ist jedoch zeitnah - besonders bei solchen Windenergieanlagen, die nicht an ein Datenfernübertragungsnetz angeschlossen sind -nicht immer möglich. Ein neu hinzugekommener Benutzer muss abwarten, bis die Benutzerdatenbank der Anlagensteuerung einer Windenergieanlage aktualisiert wurde, bevor er Zugang zur Anlagensteuerung dieser Windenergieanlage erhält. Eine ggf. kurzfristig erforderliche Zugangsbewilligung ist mit diesem Stand der Technik nicht möglich.

Im Stand der Technik ist es weiterhin bekannt, Generalpasswörter für Windenergieanlagen einzusetzen. Dabei werden für alle Windenergieanlagen eines Herstellers sämtlichen Benutzer einer Benutzergruppe, d. h. einer Gruppe mit bestimmten Zugangsbewilligungen, ein gemeinsamer (General-)Benutzername und ein gemeinsames (General-)Passwort zugewiesen. Dies hat den Nachteil, dass bei Bekanntwerden der Zugangsdaten außerhalb der Benutzergruppe ein ungehinderter Zugang zu der Anlagensteuerung durch Dritte ermöglicht wird. Aus Sicherheitsgründen müssen daher bei Ausscheiden eines Mitarbeiters mit Kenntnis der Zugangsdaten die Generalbenutzernamen und Generalpasswörter geändert und allen zugangsberechtigten Benutzern zeitnah mitgeteilt werden. Dies bedeutet einen enormen Verwaltungsaufwand und birgt erhebliche Sicherheitsrisiken.

Auch ist bspw. aus den Dokumenten EP 1 519 040 und FR 2 760 874 bekannt, dass Überprüfung der elektronischen Schlüssel und dazugehöriger Passwörter durch einen zentralen Server durchgeführt werden. Allerdings ist hierzu eine bestehende sichere Datenverbindung zwischen der Anlagensteuerung einer Windenergieanlage und einem zentralen Server erforderlich.

Die internationale Patentanmeldung WO 2008/095866 sowie das US-Patent US 3,866,173 offenbaren jeweils ein Verfahren zur Autorisierung des Zugriffs auf eine Automatisierungskomponente einer technischen Anlage mit Hilfe einer Smartcard, auf der neben Informationen über die Identität des Benutzers dessen Zugriffsrechte sowie optional ein persönlicher PIN-Code hinterlegt sind.

Auch die internationale Patentanmeldung WO 2006/021047 arbeitet mit Smartcards, wobei auf den entsprechenden Lesegeräten Benutzerlisten hinterlegt sind, mit denen die Informationen auf einer Smartcard verglichen werden. Zusätzlich sind auf der Smartcard noch Änderungen für die Benutzerliste auf dem Lesegerät abgespeichert, so dass die Benutzerliste auch auf nicht unmittelbar mit einem zentralen Server verbundenen Lesegeräten aktualisiert werden kann.

Die Patentanmeldung US 2007/0245150 offenbart ein Computersystem, welches Einmalpasswörter zur einfachen Zugriffsregelung verwendet. In dem Einmalpasswort können eine Benutzernummer und Gültigkeitsdaten codiert sein. Weitere Informationen über Zugriffsberechtigungen sind jedoch nicht vorgesehen.

Der Erfindung liegt die Aufgabe zu Grunde, ein Verfahren für die Zugriffsregelung auf Anlagensteuerungen von Windenergieanlagen zu schaffen, welches die im Stand der Technik bekannten Nachteile nicht oder nur noch in geringerem Maße aufweist. Eine weitere Aufgabe der Erfindung ist es, eine Windenergieanlage zur Durchführung des erfindungsgemäßen Verfahrens zu schaffen.

Ausgehend vom eingangs genannten Stand der Technik wird diese Aufgabe durch das Verfahren gemäß dem Hauptanspruch sowie einer Windenergieanlage gemäß dem nebengeordneten Anspruch gelöst. Vorteilhafte Ausführungsformen ergeben sich aus den abhängigen Ansprüchen.

Demnach betrifft die Erfindung ein Verfahren für die Zugriffsregelung auf Anlagensteuerungen von Windenergieanlagen, umfassend die Schritte:

a) Abfragen eines Benutzernamens und eines Passwortes über ein mit der Anlagensteuerung verbundenes Terminal, wobei in dem Passwort Berechtigungen und Prüfinformationen kodiert sind und das Passwort in Schriftzeichen umgesetzt ist, sodass es sich über eine Tastatur eingeben lässt;

b) Dekodieren der Berechtigungen und der Prüfinformationen aus dem abgefragten Passwort;

c) Überprüfen des abgefragten Benutzernamens anhand der dekodierten Prüfinformationen;
wenn die Überprüfung des abgefragten Benutzernamens anhand der dekodierten Prüfinformationen positiv abgeschlossen wird, dann

d) Überprüfen der dekodierten Berechtigungen;
wenn die dekodierten Berechtigungen ausreichen, dann

e) Freigeben des Zugriffs auf die Anlagensteuerung einer Windenergieanlage ohne Überprüfung einer Datenbank mit Benutzernamen und Passwörtern berechtigter Benutzer,

wobei die Berechtigungen ein Benutzerlevel und/oder eine Windenergieanlagen-Zugriffsklasse umfassen.

Die Schritte c) und d) können auch vertauscht werden.

Die Erfindung betrifft weiterhin eine Windenergieanlage umfassend eine Anlagensteuerung und eine mit der Anlagensteuerung verbundene Dekodiereinheit, wobei die Anlagensteuerung und/oder die Dekodiereinheit zur Abfrage eines Benutzernamens und eines Passworts mit darin kodierten Berechtigungen und Prüfinformationen über ein mit der Anlagensteuerung verbundenes Terminal ausgebildet ist, wobei das Passwort in Schriftzeichen umgesetzt ist, sodass es sich über eine Tastatur eingeben lässt, und die Dekodiereinheit zum Dekodieren der kodierten Berechtigungen und Prüfinformationen aus dem abgefragten Passwort, zur Überprüfung des abgefragten Benutzernamens anhand der dekodierten Prüfinformationen und zur Freigabe des Zugriffs auf die Anlagensteuerung abhängig von dem Ergebnis der Überprüfung des abgefragten Benutzernamens anhand der dekodierten Prüfinformationen und den dekodierten Berechtigungen ohne Überprüfung einer Datenbank mit Benutzernamen und Passwörtern berechtigter Benutzer ausgebildet ist, wobei die Berechtigungen ein Benutzerlevel (36) und/oder eine Windenergieanlagen-Zugriffsklasse (37) umfassen.

Durch das erfindungsgemäße Verfahren ist es möglich, den Zugriff einzelner Benutzer auf die Anlagensteuerung einer Windenergieanlage allein durch Vergabe speziell kodierter Passwörter zu regeln. Es bedarf auf Seiten der Windenergieanlage keiner Datenbank mehr, in der alle zum Zugriff berechtigenden Benutzernamen und der dazugehörigen Passwörter abgelegt sind. Der Aufwand der Aktualisierung solcher Datenbanken mit Positivlisten über Zugangsberechtigungen entfällt vollständig. Außerdem erhält der Benutzer sofortigen Zugriff auf die Windenergieanlagen im Rahmen seiner Berechtigungen.

Bei den Prüfinformationen handelt es sich um solche Informationen, die eine Zusammengehörigkeit zwischen abgefragtem Benutzernamen und abgefragtem Passwort mit ausreichender Wahrscheinlichkeit belegen. Bei den im Passwort kodierten Prüfinformationen in ihrer dekodierten Form kann es sich um eine Wiedergabe des abgefragten Benutzernamens handeln. Durch einen einfachen Vergleich der dekodierten Prüfinformationen mit dem Benutzernamen kann festgestellt werden, ob das abgefragte Passwort zum abgefragten Benutzernamen gehört. Es kann sich bei den Prüfinformationen aber bspw. auch um eine Prüfsumme des Benutzernamens handeln. Ebenfalls möglich ist, dass die Berechtigungen, die in das Passwort kodiert sind, mit Hilfe des Benutzernamens elektronisch signiert sind. Die Signatur kann dann als Prüfinformation in das Passwort kodiert sein und mit dem abgefragten Benutzernamen überprüft werden. Weiterhin ist es möglich, dass die Berechtigungen, die in das Passwort kodiert sind, mit Hilfe des Benutzernamens elektronisch verschlüsselt werden. Bei den Prüfinformationen kann es sich dann um solche Informationen handeln, mit denen eine korrekte Entschlüsselung der Berechtigungen überprüft werden kann.

Es ist bevorzugt, wenn den einzelnen Funktionen der Anlagensteuerung Berechtigungserfordernisse zugewiesen werden und bei Anwahl einer Funktion der Anlagensteuerung die dekodierten Berechtigungen gegen die Berechtigungserfordernisse dieser Funktion geprüft werden. "Funktionen der Anlagensteuerung" stehen für die einzelnen Einstellungs- und Konfigurationsmöglichkeiten, die innerhalb der Anlagensteuerung, bspw. für den Generator, den Umrichter, den Pitch-Controller, etc. vorgenommen werden können. Zu den Funktionen zählen aber auch reine Informationsfunktionen, die einem Benutzer Auskunft über den Betriebszustand der gesamten Windenergieanlage oder einzelner Komponenten der Windenergieanlage liefern.

Durch Einzelfallprüfung der dekodierten Berechtigungen gegen die Berechtigungserfordernisse einzelner Funktionen der Anlagensteuerung wird eine nach Funktionen aufgeschlüsselte Zugriffregelung erreicht. Es wird also ermöglicht, dass nicht nur der Zugang zur Anlagensteuerung der Windenergieanlage im Allgemeinen über den Benutzernamen und das Passwort geschützt wird, sondern auch auf die einzelnen Funktionen der Windenergieanlage gesondert Zugriff gewährt werden kann.

Die Berechtigungen umfassen ein Benutzerlevel und/oder eine Windenergieanlagen-Zugriffsklasse. Die Berechtigungen können vorzugsweise auch eine Benutzergruppe umfassen.

Bei der Benutzergruppe handelt es sich bspw. um Informationen, welcher Organisation der Benutzer angehört. So kann eine erste Benutzergruppe den Mitarbeitern des Herstellers der Windenergieanlage zugeteilt werden, während eine zweite Benutzergruppe den Mitarbeitern der Hersteller einzelner Komponenten der Windenergieanlage zugewiesen wird. Eine dritte Benutzergruppe kann für die Mitarbeiter des Betreibers der Windenergieanlage vorgesehen sein, während eine vierte Benutzergruppe für Mitarbeiter von Dienstleistungsunternehmen vorgesehen ist.

Das Benutzerlevel kann den Status eines Benutzers innerhalb einer Benutzergruppe wiedergeben. So kann z.B. einem erfahrenen, technischen Projektleiter ein Benutzerlevel zugeordnet werden, das einen umfassenden Zugriff auf die Anlagensteuerung ermöglicht. Weniger erfahrenen Mitarbeitern wird ein Level zugeordnet, das nur einen geringen Umfang an Zugriffsrechten beinhaltet. Nicht-technischen Mitarbeitern des Herstellers kann bspw. ein Berechtigungslevel zugeordnet werden, bei dem alle Funktionen, die die Konfiguration der Anlagensteuerung der Windenergieanlage verändern können, gesperrt sind und Zugriff bspw. nur auf Informationsfunktionen gewährt.

Mit der Windenergieanlagen-Zugriffsklasse kann sichergestellt werden, dass Benutzer nur Zugriff auf die Anlagensteuerung solcher Anlagen erhalten, mit denen sie vertraut sind oder die sich in deren Einflussbereich befinden. Über die Windenergieanlagen-Zugriffklasse kann sichergestellt werden, dass bspw. Mitarbeiter eines Windenergieanlagenbetreibers nur auf die Anlagensteuerung der eigenen Windenergieanlagen, nicht jedoch auf die von Konkurrenten erhalten. Es kann eine General-Windenergieanlagen-Zugriffsklasse vorgesehen sein, mit der Zugriff auf alle Windenergieanlagen unabhängig ihrer Zugriffsklassezugehörigkeit möglich ist.

Eine solche General-Windenergieanlagen-Zugriffsklasse bietet sich an für die Mitarbeiter des Herstellers der Windenergieanlage.

Über Benutzergruppe, Benutzerlevel und/oder Windenergieanlagen-Zugriffsklasse kann so einem erfahrenen Benutzer im Dienste des Herstellers der Windenergieanlage ein umfassender Zugriff auf die Anlagensteuerung gewährt werden, während Spezialisten für eine bestimmte Komponente der Windenergieanlage nur Zugriff auf die Einstellungsmöglichkeiten dieser bestimmten Komponente eingeräumt wird. Mitarbeitern des Betreibers der Windenergieanlage können bspw. ausschließlich Zugriffsrechte für Funktionen, die für den Betrieb der eigenen Windenergieanlagen, nicht jedoch für deren grundsätzliche Konfiguration, notwendig sind, Zugriff gewährt werden. Einem Mitarbeiter eines Dienstleistungsunternehmens, das ausschließlich den ordnungsgemäßen Betrieb der Windenergieanlage zu überwachen hat und bei auftretenden Fehlern den Betreiber und/oder den Hersteller benachrichtigen soll, erhält lediglich Zugriffsrechte, welche die Abfrage von Informationen, nicht jedoch die Konfiguration der Anlagensteuerung betreffen.

Über ein Ablaufdatum kann weiterhin bestimmt werden, ab wann ein Passwort nicht mehr gültig ist. Das Ablaufdatum wird bevorzugt als Gültigkeitsdauer ab einem bestimmten Stichtag abgebildet, wobei vorzugsweise die Gültigkeitsdauer in Tagen oder Monaten angegeben wird. Durch das Vorsehen dieses Ablaufdatums wird sichergestellt, dass Passwörter regelmäßig erneuert werden müssen und so die Wahrscheinlichkeit des unberechtigten Zugriffs Dritter, die Kenntnis von einem Passwort erlangt haben, reduziert oder zumindest zeitlich begrenzt wird. Außerdem verlieren ehemals berechtigte Benutzer spätestens nach Ablauf der Gültigkeitsdauer ihres Passworts jegliche Zugriffsberechtigungen, es sei denn, ihnen wird ein neues Passwort generiert. Beispielsweise kann so verhindert werden, dass ehemalige Mitarbeiter des Herstellers weiterhin Zugriff auf die Anlagensteuerung der von dem Hersteller errichteten Windenergieanlagen besitzen. Anders als bei dem an sich bekannten "password ageing", das eine zentrale zeitgesteuerte Kontrolldatei benötigt, trägt das Passwort gemäß der Erfindung sein Ablaufdatum unauslöschlich in sich. Damit wird nicht nur Autarkie erreicht, sondern auch die Manipulationssicherheit verbessert.

Es ist weiterhin bevorzugt, wenn die vorgesehenen Berechtigungen, der in das Passwort zu kodierende Benutzername und/oder das Passwort selbst während oder nach der Kodierung verschlüsselt werden und vor oder während der Dekodierung entschlüsselt werden. Dadurch kann der Grad der Sicherheit des Passworts bzw. der Kombination aus Benutzernamen und Passwort weiter erhöht werden. Durch eine entsprechende Verschlüsselung werden Rückschlüsse über das eigentliche Kodierverfahren erschwert. Für diese Ver- bzw. Entschlüsselung kann ein symmetrisches oder ein asymmetrisches Verschlüsselungsverfahren verwendet werden, bei dem der Verschlüsselungsvorgang anhand frei wählbarer Schlüssel erfolgt. Bevorzugt ist es, wenn bei der Ver- bzw. Entschlüsselung der vorgesehenen Berechtigungen des zu kodierenden Benutzernamens und/oder des Passworts einer ersten Benutzergruppe ein erster Schlüssel und für eine zweite Benutzergruppe ein zweiter Schlüssel verwendet wird. Indem ein Dritter weder dem Benutzernamen noch dem Passwort ansehen kann, zu welcher Benutzergruppe der zu dem Benutzernamen gehörige Benutzer gehört, erhält er auch keine Informationen darüber, welches Ver- bzw. Entschlüsselungsverfahren bzw. welcher Schlüssel hierzu verwendet wurde. Die Rückschlussmöglichkeiten auf das verwendete Kodierverfahren werden weiter erschwert und die Sicherheit damit erhöht.

Es kann vorgesehen sein, dass der eingegebene und/oder dekodierte Benutzername gegen eine Liste mit gesperrten Benutzernamen geprüft wird und der Zugang zur Anlagensteuerung bei Auffinden des eingegebenen und/oder dekodierten Benutzernamens auf der Liste mit gesperrten Benutzernamen verwehrt wird. Durch das Vorsehen einer solchen Liste auf Seiten der Anlagensteuerung ist es möglich, Benutzern, deren im Passwort kodierte Gültigkeitsdauer noch nicht abgelaufen ist, dennoch den Zugriff auf die Anlagensteuerung einer Windenergieanlage zu verwehren. Sollte der Benutzer ein Passwort mit zeitlich unbegrenzter Gültigkeitsdauer besitzen oder die Gültigkeitsdauer grundsätzlich nicht in das Passwort dekodiert sein, so ist dies eine Möglichkeit, einzelnen Benutzern den Zugriff auf Anlagensteuerungen von Windenergieanlagen zu verwehren, ohne die Kodierung oder Verschlüsselung der Passwörter für alle Benutzer zu verändern.

Es ist bevorzugt, dass das Passwort durch eine von der Anlagensteuerung getrennte Kodiereinheit generiert wird. Indem die Kodiereinheit zur Kodierung des Benutzernamens und der Berechtigungen in ein Passwort getrennt von der Windenergieanlage bzw. deren Anlagensteuerung ausgeführt ist, wird die Gefahr der Manipulation verringert. An der Windenergieanlage wird nur noch eine Dekodierung durchgeführt, die je nach verwendetem Kodierverfahren keine oder nur wenig Rückschlüsse auf die eigentliche Kodierung zulässt.

Nachfolgend wird beispielhaft ein Kodier- und Dekodierverfahren zur Kodierung vorgesehener Berechtigungen und Prüfinformationen in ein Passwort beschrieben.

Die vorgesehenen Berechtigungen für jeden Benutzer sind als Benutzergruppe, Benutzerlevel, Windenergieanlagen-Zugriffsklasse und Ablaufdatum zahlenmäßig abgebildet. Der Wert für die Benutzergruppe kann in einem Bereich von 0 bis 15, für das Benutzerlevel in einem Bereich von 0 bis 31 und für die Windenergieanlagen-Zugriffsklasse in einem Bereich von 0 bis 4095 liegen. Das Ablaufdatum ist als Anzahl der Monate ab einem Basisdatum abgebildet und kann einen Wertebereich von 1 bis 600 (entsprechend 50 Jahre) annehmen. Das Ablaufdatum kann auch als Anzahl der Tage ab einem Basisdatum abgebildet werden, wobei der Wertebereich entsprechend größer gewählt werden kann, bspw. von 1 bis 17800.

Alle Informationen über die vorgesehenen Berechtigungen werden in eine ganze Zahl K kodiert. Wenn g die zu kodierende Benutzergruppe mit 16 möglichen Werten, l das zu kodierende Benutzerlevel mit 32 möglichen Werten, d das zu kodierende Gültigkeitsdatum in Monaten mit - in diesem Beispiel - 600 möglichen Werten und z die zu kodierende Windenergieanlagen-Zugriffsklasse mit 4096 Werten ist, lässt sich die ganze Zahl K wie folgt ermitteln:

$$K = g + 16 \times l + 16 \times 32 \times d + 16 \times 32 \times 601 \times z.$$

Beispielsweise ergibt sich aus den Ausgangswerten g = 4, l = 10, d = 3, z = 200 die ganze Zahl

$$K = 61544100.$$

Die Binärdarstellung dieser Zahl lautet:

$$K(bin) = 11101010110001011010100100.$$

Bei der ganzen Zahl K handelt es sich um die Nutzdaten des später generierten Passwortes.

Um das Passwort vor Manipulationen zu schützen, wird ein sogenannter "message authentication code" (MAC) berechnet und an die ganze Zahl K in ihrer Binärdarstellung angehängt. Dazu wird an die ganze Zahl K in Binärdarstellung der frei wählbare Benutzername - ebenfalls in Binärdarstellung angehängt - und daraus mit Hilfe eines vorgegebenen Schlüssels ein MAC berechnet:

$$K(bin) = 11101010110001011010100100$$

$$Benutzername(bin) = 111111110011111111$$

```
MAC(11101010110001011010100100 111111110011111111) =
11010110100101010010101011110101001001010101000101
0111
11110101001010111111001010101010010101010001010100
101010
0101000101001010101.
```

Das Anfangsstück des MAC - in diesem Fall die ersten 24 Bit - werden an die ganze Zahl K angehängt, woraus sich die zusammengesetzte Zahl P ergibt:

$$P = 11101010110001011010100100$$
$$11010110100101010100101010.$$

Anhand der Zahl P in Binärdarstellung lässt sich überprüfen, ob die Zahl P zu einem abgefragten Benutzernamen gehört. Dazu wird aus dem ersten Teil der zusammengesetzten Zahl P, genauer gesagt den Nutzdaten bzw. der Zahl K, und dem abgefragten Benutzernamen erneut ein MAC berechnet und die ersten 24 Bit des neu berechneten MAC mit dem in der zusammengesetzten Zahl P hinterlegten MAC verglichen. Bei Übereinstimmung des neu berechneten MAC mit dem in der zusammengesetzten Zahl hinterlegten MAC ist sichergestellt, dass der Benutzername und das Passwort bzw. die darin enthaltenen Berechtigungen zusammengehören.

Damit man einem Passwort nicht ansieht, welche Nutzdaten es enthält, wird der Nutzdatenanteil der zusammengesetzten Zahl P verschlüsselt. Dazu kann eine Stromchiffre, wie bspw. die RC4, verwendet werden, welcher mit einem zusätzlichen Schlüssel, der Binärkodierung des Benutzernamens und der oben berechneten MAC initialisiert wird. Nach diesem Schritt liegt ein sicheres Passwort mit darin kodierten Berechtigungen und Prüfinformationen in Binärkodierung vor.

Aus dem so hergestellten Passwort in Binärkodierung wird durch eine Umsetzung in Schriftzeichen ein für den Benutzer vereinfachtes Passwort generiert, welches sich auch gut über eine Tastatur eingeben lässt. Beispielsweise ist es möglich, die Binärkodierung des Passwortes in eine Zeichenfolge mit den Ziffern 0 bis 9 sowie die Buchstaben a bis z umzuwandeln. Dabei ist es möglich, gewisse Buchstaben auszulassen, bspw. den Buchstaben "1". Damit wird eine zusätzliche Sicherheit gegen sog. "brute force"-Angriffe erreicht, bei denen einfach alle möglichen Passwörter der Reihe nach automatisiert durchprobiert werden, denn alle Passwortversuche mit einem gesperrten Buchstaben entlarven sich selbst als unautorisierten Zugriffsversuch. Außerdem kann so die Verwechslungsgefahr zwischen bestimmten Symbolen, bspw. zwischen dem Buchstaben "1" und der Ziffer "1" verringert werden.

Zur Dekodierung des Passwortes und zur Überprüfung auf Zugehörigkeit zum abgefragten Benutzernamen führt eine Dekodiereinheit die vorstehenden Aktionen in umgekehrter Reihenfolge durch. Zunächst wird das Passwort in seine entsprechende Binärdarstellung umgewandelt und die Nutzdaten werden entschlüsselt. Anschließend wird aus den Nutzdaten und dem eingegebenen Benutzernamen die MAC berechnet und - wie oben angegeben - mit der in der zusammengesetzten Zahl enthaltenen MAC verglichen. Sofern eine Übereinstimmung vorliegt, werden die Zugriffsrechte aus den Nutzdaten dekodiert.

Sofern in der Anlagensteuerung hinterlegt ist, welche Windenergieanlagen-Zugriffsklasse die zum Zugriff berechtigten Benutzer haben müssen, wird der Zugang zur Anlagensteuerung erst nach gefundener Übereinstimmung mit den an der Windenergieanlage hinterlegten Windenergieanlagen-Zugriffsklassen mit der aus dem Passwort dekodierten Zugriffsklasse erlaubt. Des Weiteren kann in der Anlagensteuerung für jede Funktion hinterlegt sein, welche Benutzergruppen mit welchem Benutzerlevel Zugriff auf einzelne Funktionen der Anlagensteuerung erhalten sollen. Ebenfalls wird geprüft, ob das Passwort noch nicht abgelaufen ist. Dazu wird von einem Basistag an die Anzahl der Monate zum aktuellen Datum ermittelt und mit dem in den Nutzdaten enthaltenen Ablaufdatum verglichen. Nur wenn die Berechtigungen aus dem Passwort alle Vorraussetzungen erfüllen, erhält ein Nutzer Zugriff auf die Anlagensteuerung bzw. eine bestimmte Funktion der Anlagensteuerung.

Die erfindungsgemäße Windenergieanlage ist zur Durchführung des erfindungsgemäßen Verfahrens geeignet. Es wird daher auf die obenstehende Erläuterung verwiesen.

Die Erfindung wird nun anhand vorteilhafter Ausführungsformen unter Bezugnahme auf die beigefügten Zeichnungen beispielhaft beschrieben. Es zeigen:

Fig. 1: ein Ablaufdiagramm eines erfindungsgemäßen Verfahrens;

Fig. 2: eine erfindungsgemäße Windenergieanlage zur Durchführung des erfindungsgemäßen Verfahrens; und

Fig. 3: eine schematische Darstellung einer Datenbank mit den Berechtigungserfordernissen für einzelne Funktionen einer Anlagensteuerung einer Windenergieanlage.

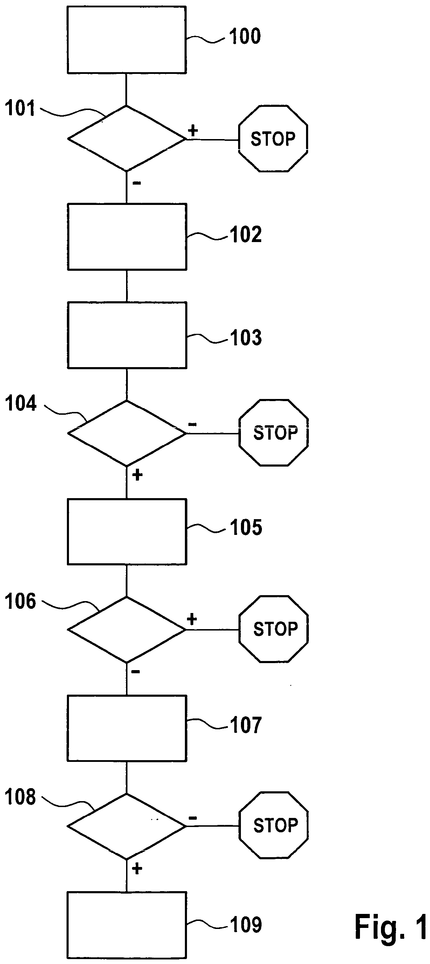

In Figur 1 ist ein Ablaufdiagramm eines erfindungsgemäßen Verfahrens dargestellt.

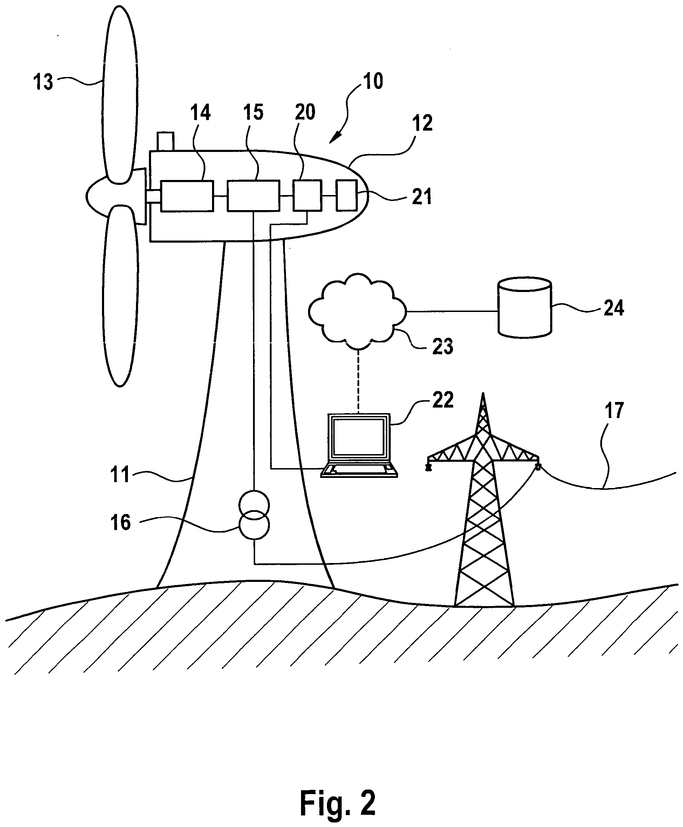

In Schritt 100 werden, bevor Zugriff auf die Anlagensteuerung 20 einer Windenergieanlage 10 (vgl. Fig. 2) gewährt wird, ein Benutzername und ein Passwort mit darin dekodierten Berechtigungen und Prüfinformationen abgefragt.

In einem zweiten Schritt 101 wird überprüft, ob sich der abgefragte Benutzername auf einer Liste mit gesperrten Benutzernamen befindet. Ist dies der Fall, wird das Verfahren abgebrochen und der Zugriff auf die Anlagensteuerung 20 einer Windenergieanlage 10 verwehrt.

Befindet sich der abgefragte Benutzername nicht auf der Liste mit den gesperrten Benutzernamen, wird - nachdem in einem Schritt 102 das Passwort oder die darin enthaltenen Berechtigungen ggf. entschlüsselt werden - geprüft, ob das abgefragte Passwort tatsächlich zum abgefragten Benutzernamen gehört. Dazu werden die im Passwort enthaltenen Prüfinformationen herangezogen. Bei den Prüfinformationen kann es sich um eine Signatur handeln, die aus ins Passwort kodierten Berechtigungen und dem dazugehörigen Benutzernamen generiert wurde. Im Schritt 103 wird dann aus den aus dem Passwort dekodierten Berechtigungen und dem abgefragten Benutzernamen eine Signatur erstellt und mit den Prüfinformationen verglichen. Stimmt die erstellte Signatur nicht mit den Prüfinformationen überein (Schritt 104), wird das Verfahren abgebrochen und der Zugriff auf die Anlagensteuerung 20 einer Windenergieanlage 10 verwehrt.

Fällt die Überprüfung in Schritt 104 positiv aus, wird die Gültigkeit des Passwortes überprüft. Zur Überprüfung der Gültigkeit des Passworts wird ein als Berechtigung im Passwort kodiertes Ablaufdatum herangezogen. Das Ablaufdatum repräsentiert die Anzahl der Monate ab einem bestimmten Stichtag, in denen das Passwort Gültigkeit hat. Es wird die Anzahl der Monate zwischen dem aktuellen Datum und dem Stichtag bestimmt (Schritt 105) und anschließend (Schritt 106) diese Anzahl der Monate mit der aus dem Passwort stammenden Anzahl der Monate, die das Ablaufdatum bestimmen, verglichen. Ist die aktuelle Anzahl der Monate ab dem Basistag größer als die im Passwort gespeicherte Anzahl, so gilt das Passwort als abgelaufen und der Zugriff auf die Anlagensteuerung 20 wird verwehrt.

In Schritt 107 wird abschließend festgestellt, ob die Berechtigungen aus dem abgefragten Passwort den Zugriff auf die Anlagensteuerung 20 erlauben oder nicht (Schritt 108). Dabei ist es möglich, den Zugriff auf die Anlagensteuerung 10 allgemein, oder aber nur den Zugriff auf einzelne Funktionen der Anlagensteuerung 10 zu verwehren. Ansonsten wird der Zugriff gestattet (Schritt 109).

Die Windenergieanlage 10 aus Fig. 2 umfasst zur Umwandlung von Windenergie in elektrische Energie einen an einer drehbar auf einem Turm 11 gelagerten Gondel 12 befestigten Rotor 13, der einen Asynchrongenerator 14 antreibt. Die vom Generator 14 kommende elektrische Leistung wird über einen Umrichter 15 und einen Transformator 16 so umgewandelt, dass sie in ein Hoch- oder Mittelspannungsnetz 17 eingespeist werden kann. Die Umwandlung erfolgt insbesondere in Bezug auf Spannungsamplitude, Frequenz- und Phasenverschiebung.

Zur Steuerung der Windenergieanlage 10 ist eine Anlagensteuerung 20 vorgesehen, die über nicht dargestellte Steuerleitungen mit einzelnen Komponenten der Windenergieanlage verbunden ist. Über die Anlagesteuerung 20 werden die einzelnen Komponenten der Windenergieanlage gesteuert.

Die Anlagensteuerung 20 weist mehrere Funktionen auf, über die Einstellungen für die Steuerung der Windenergieanlage 10 vorgenommen werden können. Zu diesen Funktionen zählen auch solche, die lediglich Informationen über den Betriebszustand der Windenergieanlage liefern und keinen direkten Einfluss auf die Steuerung der Windenergieanlage 10 bieten.

Mit der Anlagensteuerung verbunden sind eine Dekodiereinheit 21 und ein Terminal 22, über welches ein Benutzer Eingaben machen kann. Das Terminal 22 ist über eine optionale (gestrichelt dargestellte) Verbindung mit dem Internet 23 und darüber mit einem zentralen Server 24 verbunden.

Bevor ein Benutzer Zugriff auf die einzelnen Funktionen der Anlagensteuerung 20 erhält, wird er über das Terminal nach einem Benutzernamen und einem Passwort gefragt. In dem Passwort sind Berechtigungen und Prüfinformationen kodiert. Bei den kodierten Berechtigungen handelt es sich um Benutzergruppe, Benutzerlevel, Windenergieanlagen-Zugriffsklasse und Ablaufdatum des Passworts.

Nach Eingabe des Benutzernamens und des Passworts überprüft die Dekodiereinheit 21 zunächst die Zusammengehörigkeit zwischen diesen beiden Eingaben. Dabei wird überprüft, ob die im Passwort kodierten Prüfinformationen zu dem abgefragten Benutzernamen passen. Dies kann bspw. auch dadurch erfolgen, dass die im Passwort kodierten Berechtigungen mit dem Benutzernamen signiert sind, wobei die Prüfinformationen die Signatur darstellen, und die Signatur mit dem abgefragten Benutzernamen überprüft wird. Anstelle einer Signatur kann auch eine Verschlüsselung erfolgen. Es ist möglich, dass das Passwort und/oder die Berechtigungen signiert und/oder verschlüsselt wird.

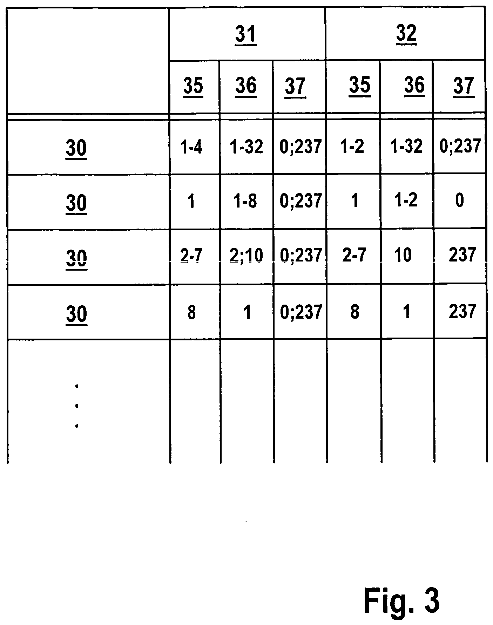

Sofern die Zugehörigkeitsprüfung von abgefragtem Benutzernamen und Passwort positiv verläuft, werden aus dem Passwort die vorgesehenen Berechtigungen dekodiert. In der Anlagensteuerung ist für jede Funktion der Anlagensteuerung 20 eine Zugriffsberechtigung abgelegt, die sich in Lesezugriff und Schreibzugriff unterteilt. Eine entsprechende Datenbank ist in Fig. 3 skizziert.

Für jede Funktion 30 der Anlagensteuerung 20 ist festgelegt, welche Benutzergruppe 35, Benutzerlevel 36, Windenergieanlagen-Zugriffsklasse 37 die Berechtigungen eines Benutzers haben muss, damit dieser Lese- 31 und/oder Schreibzugriff 32 erhält. Dafür sind für jede Funktion 30 entsprechende Wertebereiche der vorgenannten Parameter 35-37 für den Lesezugriff 31 und für den Schreibzugriff 32 abgespeichert. Nur wenn die Berechtigungen aus dem Passwort des Benutzers alle Voraussetzungen in Bezug auf Benutzergruppe 35, Benutzerlevel 36 und Windenergieanlagen-Zugriffsklasse 37 erfüllen, erhält er auf die einzelne Funktion Lese- 31 und/oder Schreibzugriff 32.

Ob ihm letztendlich Zugriff gewährt wird, ist auch davon abhängig, ob sein Passwort noch Gültigkeit hat. Zur Überprüfung der Gültigkeit des Passworts wird das im Passwort kodierte Ablaufdatum herangezogen. Das Ablaufdatum repräsentiert die Anzahl der Monate ab einem bestimmten Stichtag, in denen das Passwort Gültigkeit hat. Die Dekodiereinheit 21 bestimmt die Anzahl der Monate zwischen dem aktuellen Datum und dem Stichtag und vergleicht diese Anzahl der Monate mit der aus dem Passwort stammenden Anzahl der Monate, die das Ablaufdatum bestimmen. Ist die aktuelle Anzahl der Monate ab dem Basistag größer als die im Passwort gespeicherte Anzahl, so gilt das Passwort als abgelaufen und der Zugriff wird verwehrt.

**Patentansprüche**

1. Verfahren für die Zugriffsregelung auf Anlagensteuerungen (20) von Windenergieanlagen (10), umfassend die Schritte:

a) Abfragen eines Benutzernamens und eines Passwortes über ein mit der Anlagensteuerung (20) verbundenes Terminal (22), wobei in dem Passwort Berechtigungen und Prüfinformationen kodiert sind und das Passwort in Schriftzeichen umgesetzt ist, sodass es sich über eine Tastatur eingeben lässt;
b) Dekodieren der Berechtigungen und der Prüfinformationen aus dem abgefragten Passwort;
c) Überprüfen des abgefragten Benutzernamens anhand der dekodierten Prüfinformationen;
wenn die Überprüfung des abgefragten Benutzernamens anhand der dekodierten Prüfinformationen positiv abgeschlossen wird, dann
d) Überprüfen der dekodierten Berechtigungen;
wenn die dekodierten Berechtigungen ausreichen, dann
e) Freigeben des Zugriffs auf die Anlagensteuerung (20) einer Windenergieanlage (10) ohne Überprüfung einer Datenbank mit Benutzernamen und Passwörtern berechtigter Benutzer,

wobei die Berechtigungen ein Benutzerlevel (36) und/oder eine Windenergieanlagen-Zugriffsklasse (37) umfassen.

2. Verfahren nach Anspruch 1, **dadurch gekennzeichnet, dass** jeder Funktion der Anlagensteuerung Berechtigungserfordernisse zugewiesen sind und bei der Anwahl einer Funktion (30) der Anlagensteuerung (20) die dekodierten Berechtigungen gegen die Berechtigungserfordernisse dieser Funktion (30) geprüft werden.

3. Verfahren nach Anspruch 1 oder 2, **dadurch gekennzeichnet, dass** die Berechtigungen eine Benutzergruppe (35) umfassen.

4. Verfahren nach einem der vorhergehenden Ansprüche, **dadurch gekennzeichnet, dass** die Berechtigungen und/oder das Passwort während oder nach der Kodierung verschlüsselt und vor oder während der Dekodierung entschlüsselt werden.

5. Verfahren nach Anspruch 4, **dadurch gekennzeichnet, dass** zur Ver- und Entschlüsselung ein symmetrisches oder asymmetrisches Verschlüsselungsverfahren verwendet wird.

6. Verfahren nach Anspruch 4 oder 5, **dadurch gekennzeichnet, dass** zur Ver- und/oder Entschlüsselung der vorgesehenen Berechtigungen und/oder des Passworts einer ersten Benutzergruppe ein erster Schlüssel, für eine zweite Benutzergruppe ein zweiter Schlüssel oder ein zweites Verschlüsselungsverfahren verwendet wird.

7. Verfahren nach einem der vorhergehenden Ansprüche, **dadurch gekennzeichnet, dass** der Zugang zur Anlagensteuerung (20) bei Auffinden des abgefragten Benutzernamens auf einer Liste mit gesperrten Benutzernamen verwehrt wird.

8. Verfahren nach einem der vorhergehenden Ansprüche, **dadurch gekennzeichnet, dass** das Passwort durch eine von der Anlagensteuerung (20) getrennte Kodiereinheit generiert wird.

9. Windenergieanlage umfassend eine Anlagensteuerung (20) und eine mit der Anlagensteuerung (20) verbundene Dekodiereinheit (21), **dadurch gekennzeichnet, dass** die Anlagensteuerung (20) und/oder die Dekodiereinheit (21) zur Abfrage eines Benutzernamens und eines Passworts mit darin kodierten Berechtigungen und Prüfinformationen über ein mit der Anlagensteuerung (20) verbundenes Terminal (22) ausgebildet ist, wobei das Passwort in Schriftzeichen umgesetzt ist, sodass es sich über eine Tastatur eingeben lässt, und die Dekodiereinheit (21) zum Dekodieren der kodierten Berechtigungen und Prüfinformationen aus dem abgefragten Passwort, zur Überprüfung des abgefragten Benutzernamens anhand der dekodierten Prüfinformationen und zur Freigabe des Zugriffs auf die Anlagensteuerung (20) abhängig von dem Ergebnis der Überprüfung des abgefragten Benutzernamens anhand der dekodierten Prüfinformationen und den dekodierten Berechtigungen ohne Überprüfung einer Datenbank mit Benutzernamen und Passwörtern berechtigter Benutzer ausgebildet ist, wobei die Berechtigungen ein Benutzerlevel (36) und/oder eine Windenergieanlagen-Zugriffsklasse (37) umfassen.

10. Windenergieanlage nach Anspruch 9, **dadurch gekennzeichnet, dass** sie zur Durchführung des Verfahrens nach einem der Ansprüche 2 bis 8 ausgebildet ist.

**Claims**

1. Method for access control to installation control systems (20) of wind energy installations (10), comprising the following steps:

   a) requesting a user name and a password via a terminal (22) connected to the installation control system (20), wherein authorizations and checking information are coded in the password and the password is converted into characters so that it can be input via a keyboard;
   b) decoding the authorizations and the checking information from the requested password;
   c) checking the requested user name on the basis of the decoded checking information;
   if the check of the requested user name on the basis of the decoded checking information has a positive result, then
   d) checking the decoded authorizations;
   when the decoded authorizations are sufficient, then
   e) allowing access to the installation control system (20) of a wind energy installation (10) without checking a database having user names and passwords of authorized users,

   wherein the authorizations comprise a user level (36) and/or a wind energy installation access class (37).

2. Method according to Claim 1, **characterized in that** each function of the installation control system is assigned authorization requirements and, when selecting a function (30) of the installation control system (20), the decoded authorizations are checked against the authorization requirements for this function (30).

3. Method according to Claim 1 or 2, **characterized in that** the authorizations comprise a user group (35).

4. Method according to one of the preceding claims, **characterized in that** the authorizations and/or the password are/is encrypted during or after coding, and are/is decrypted before or during decoding.

5. Method according to Claim 4, **characterized in that** a symmetrical or asymmetric encryption method is used for encryption and decryption.

6. Method according to Claim 4 or 5, **characterized in that** a first key is used for encryption and/or decryption of the authorizations provided and/or of the password of a first user group, and a second key or a second encryption method is used for a second user group.

7. Method according to one of the preceding claims, **characterized in that** the access to the installation control system (20) is refused if the requested user name is found on a list with blocked user names.

8. Method according to one of the preceding claims, **characterized in that** the password is generated by a coding unit which is separate from the installation control system (20).

9. Wind energy installation comprising an installation control system (20) and a decoding unit (21) which is connected to the installation control system (20), **characterized in that** the installation control system (20) and/or the decoding unit (21) are/is designed to request a user name and a password with authorizations and checking information coded therein via a terminal (22) connected to the installation control system (20), wherein the password is converted into characters so that it can be input via a keyboard, and the decoding unit (21) is designed to decode the coded authorizations and checking information from the requested password, to check the requested user name on the basis of the decoded checking information and to allow access to the installation control system (20) depending on the result of the check of the requested user name on the basis of the decoded checking information and the decoded authorizations without checking a database having user names and passwords of authorized users, wherein the authorizations comprise a user level (36) and/or a wind energy installation access class (37).

**10.** Wind energy installation according to Claim 9, **characterized in that** the installation is designed to carry out the method according to one of Claims 2 to 8.

**Revendications**

**1.** Procédé de régulation de l'accès à des commandes d'équipement (20) d'aérogénérateurs (10), comprenant les étapes suivantes :

  a) demande d'un nom d'utilisateur et d'un mot de passe par le biais d'un terminal (22) relié à la commande d'équipement (20), des autorisations et des informations de contrôle étant codées dans le mot de passe et le mot de passe étant converti en caractères d'écriture de sorte qu'il puisse être saisie par un clavier ;
  b) décodage des autorisations et des informations de contrôle à partir du mot de passe demandé ;
  c) contrôle du nom d'utilisateur demandé à l'aide des informations de contrôle décodées ;
  si le contrôle du nom d'utilisateur demandé à l'aide des informations de contrôle décodées s'achève avec un résultat positif, alors
  d) contrôle des autorisations décodées ;
  si les autorisations décodées sont suffisantes, alors
  e) libération de l'accès à la commande d'équipement (20) d'un aérogénérateur (10) sans contrôler une base de données de noms d'utilisateur et de mots de passe d'utilisateurs autorisés,

les autorisations comportant un niveau d'utilisateur (36) et/ou une classe d'accès à l'aérogénérateur (37).

**2.** Procédé selon la revendication 1, **caractérisé en ce que** des exigences d'autorisation sont affectées à chaque fonction de la commande d'équipement et lors de la sélection d'une fonction (30) de la commande d'équipement (20), les autorisations décodées sont contrôlées par rapport aux exigences d'autorisation de cette fonction (30) .

**3.** Procédé selon la revendication 1 ou 2, **caractérisé en ce que** les autorisations comportent un groupe d'utilisateurs (35) .

**4.** Procédé selon l'une des revendications précédentes, **caractérisé en ce que** les autorisations et/ou le mot de passe sont cryptés pendant ou après le codage et décryptés avant ou pendant le décodage.

**5.** Procédé selon la revendication 4, **caractérisé en ce qu'**un procédé de cryptage symétrique ou asymétrique est utilisé pour le cryptage et le décryptage.

**6.** Procédé selon la revendication 4 ou 5, **caractérisé en ce qu'**une première clé est utilisée pour le cryptage et/ou le décryptage des autorisations prévues et/ou du mot de passe d'un premier groupe d'utilisateurs, une deuxième clé ou un deuxième procédé de cryptage pour un deuxième groupe d'utilisateurs.

**7.** Procédé selon l'une des revendications précédentes, **caractérisé en ce que** l'accès à la commande d'équipement (20) est refusé lorsque le nom d'utilisateur demandé est trouvé sur une liste de noms d'utilisateur bloqués.

**8.** Procédé selon l'une des revendications précédentes, **caractérisé en ce que** le mot de passe est généré par une unité de codage séparée de la commande d'équipement (20).

**9.** Aérogénérateur comportant une commande d'équipement (20) et une unité de décodage (21) reliée à la commande d'équipement (20), **caractérisé en ce que** la commande d'équipement (20) et/ou l'unité de décodage (21) sont conçus pour demander un nom d'utilisateur et un mot de passe dans lequel sont codées des autorisations et des informations de contrôle par le biais d'un terminal (22) relié à la commande d'équipement (20), le mot de passe étant converti en caractères d'écriture de sorte qu'il puisse être saisie par un clavier, et l'unité de décodage (21) étant conçue pour décoder les autorisations et les informations de contrôle codées à partir du mot de passe demandé, pour contrôler le nom d'utilisateur demandé à l'aide des informations de contrôle décodées et pour libérer l'accès à la commande d'équipement (20) en fonction du résultat du contrôle du nom d'utilisateur demandé à l'aide des informations de contrôle décodées et des autorisations décodées sans contrôler une base de données de noms d'utilisateur et de mots de passe d'utilisateurs autorisés, les autorisations comportant un niveau d'utilisateur (36) et/ou une classe d'accès à l'aérogénérateur (37).

**10.** Aérogénérateur selon la revendication 9, **caractérisé en ce qu'**il est conçu pour mettre en oeuvre le procédé selon l'une des revendications 2 à 8.

Fig. 1

**Fig. 2**

|  | 31 | | | 32 | | |
|---|---|---|---|---|---|---|
|  | 35 | 36 | 37 | 35 | 36 | 37 |
| 30 | 1-4 | 1-32 | 0;237 | 1-2 | 1-32 | 0;237 |
| 30 | 1 | 1-8 | 0;237 | 1 | 1-2 | 0 |
| 30 | 2-7 | 2;10 | 0;237 | 2-7 | 10 | 237 |
| 30 | 8 | 1 | 0;237 | 8 | 1 | 237 |
| ⋮ | | | | | | |

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1519040 A
- FR 2760874
- WO 2008095866 A
- US 3866173 A
- WO 2006021047 A
- US 20070245150 A